# EUROPÄISCHE PATENTSCHRIFT

(11) **EP 1 565 323 B1**
(45) Veröffentlichungstag und Bekanntmachung des Hinweises auf die Patenterteilung: **30.07.2008**
(21) Anmeldenummer: 03780060.4
(22) Anmeldetag: 26.11.2003
(51) Int. Cl.: B42D 15/00, B42D 15/10, B41M 3/14, C09D 11/00

(54) **SICHERHEITSELEMENTE MIT DURCH ENERGIEEINTRAG AKTIVIERBAREN EIGENSCHAFTEN**
SAFETY ELEMENT EXHIBITING PROPERTIES ACTIVABLE BY ENERGY SUPPLY
ELEMENTS DE SECURITE PRESENTANT DES PROPRIETES ACTIVABLES PAR APPORT D'ENERGIE

(30) Priorität: 28.11.2002 AT 17812002
(43) Veröffentlichungstag der Anmeldung: 24.08.2005
(73) Patentinhaber: Hueck Folien Gesellschaft m.b.H., 4342 Baumgartenberg (AT)
(72) Erfinder: KASTNER, Friedrich, A-4710 Grieskirchen (AT); MÜLLER, Matthias,, 92699 Bechtsrieth (DE); BERGSMANN, Martin, A-4020 Linz (AT); KAMMERER, Hans, Hermann, 92637 Weiden (DE)
(74) Vertreter: Landgraf, Elvira
(86) Internationale Anmeldenummer: PCT/EP2003/013296
(87) Internationale Veröffentlichungsnummer: WO 2004/048118

(56) Entgegenhaltungen:
- EP-A- 1 116 755
- EP-A- 1 138 743
- US-A1- 2002 092 441
- US-A1- 2002 130 303

## Beschreibung

Die Erfindung betrifft Sicherheitselemente mit durch Energieeintrag aktivierbaren Sicherheitsmerkmalen.

Sicherheitselemente werden in vielen Bereichen angewendet um die Fälschungssicherheit sensibler Güter zu gewährleisten. So werden beispielsweise in Datenträgern, insbesondere Wertdokumenten, wie Ausweisen, Karten, Banknoten, bei Verpackungsmaterialien für sensible Güter, wie Pharmazeutika, Kosmetika, Elektronikbauteile, bei Etiketten, Siegeln und dergleichen beispielsweise in der Textilindustrie derartige Sicherheitsmerkmale verwendet.

Zusätzlich ist es auch wünschenswert beispielsweise bei Verpackungen Manipulationen, d.h. unbefugtes Öffnen der Verpackung, Entfernen oder Austausch von Teilen und dergleichen nachweisbar zu machen. Um gleichzeitig einen derartigen Nachweis führen zu können und auch ausschließen zu können, dass das Sicherheitsmerkmal ausgetauscht wurde, sollen diese Merkmale auch fälschungssicher ausgeführt sein.

Sicherheitselemente mit visuell sichtbaren Merkmalen sind beispielsweise aus EP - A 0 330 733 und EP-A-1116755 bekannt. Es sind Sicherheitselemente, insbesondere Sicherheitsfäden bestehend aus einer lichtdurchlässigen Kunststofffolie, einer sich über das gesamte Sicherheitselement erstreckenden opaken Beschichtung, die Aussparungen in Form der einzubringenden Kodierung, insbesondere in Form von Zeichen und Mustern aufweist, beschrieben. Zumindest in den durch die Aussparungen definierten Bereichen können deckungsgleich farbgebende und/oder lumineszierende Substanzen vorhanden sein, durch die sich die Codierung von der opaken Beschichtung unter entsprechendem Lichteinfluss in farblich kontrastierender Form unterscheidet.

Farben und Lacke mit lumineszierenden Eigenschaften enthalten anorganische oder organische Pigmente oder Farbstoffe. Die Leuchtkraft der Pigmente bzw. der Farbstoffe ist im allgemeinen abhängig von deren Größe bzw. deren Konzentration, d.h. je höher die Leuchtkraft, desto höher die Pigmentgröße bzw. die Farbstoffkonzentration. Daher sind entsprechend leuchtkräftige Pigmente bzw. Farbstoffe im allgemeinen aufgrund ihrer Größe bzw. der erforderlichen Konzentration im Tiefdruck- oder Flexodruckverfahren nur schwer oder in der für die Anwendung in Sicherheitsmerkmalen nicht mit der ausreichenden Präzision und Auflösung verdruckbar. Die Pigmente bzw. Farbstoffe setzen sich in einer Tiefdruck- oder Flexodruckformulierung meist betonartig ab.

Aufgabe der Erfindung war es daher Sicherheitselemente bereitzustellen, die Merkmale aufweisen, die durch Energieeintrag zur Emission von elektromagnetischer Strahlung angeregt werden können.

Gegenstand der Erfindung sind daher Sicherheitselemente, die auf einem Trägersubstrat Sicherheitsmerkmale mit lumineszierenden durch Energieeintrag aktivierbare Eigenschaften aufweisen, dadurch gekennzeichnet, dass die durch Energieeintrag aktivierbaren Merkmale in Form einer in Tiefdinckverfahren aufgebrachten Beschichtung aus Farben und/oder Lacken, die Pigmente und/oder Farbstoffe eine Größe von 1 bis 50 µm und einer Größe von 20-50 µm und ein lösungsmittelbasiertes Konzentrat eines Netz- und/oder Dispergiermittel mit pigmentaffinen Blockcopolymeren enthalten, bestehen.

Unter Energieeintrag wird sowohl elektromagnetische Strahlung, vorzugsweise im Bereich von 300 - 800 nm, direkte Energiezufuhr durch Kontakt, wie beispielsweise durch elektrischen Strom, induktive Kopplung, Wärmezufuhr, oder der Eintrag und die Umwandlung von kinetischer Energie, verstanden.

Als Pigmente oder Farbstoffe kommen sowohl anorganische als auch organische durch Energieeintrag aktivierbare Pigmente oder Farbstoffe in Frage. Die Pigmente oder Farbstoffe können auch verkapselt sein. Es können auch unterschiedliche Pigmente oder Farbstoffe nebeneinander oder ineinander verkapselt vorliegen.
Die durch Energieeintrag aktivierbaren Pigmente oder Farbstoffe können unterschiedliche Eigenschaften aufweisen, d.h. es können sowohl lumineszierende, beispielsweise fluoreszierende oder phosphoreszierende Pigmente oder Farbstoffe, oder auch elektrolumineszierende Pigmente oder Farbstoffe oder biolumineszierende oder chemolumineszierende Pigmente oder Farbstoffe verwendet werden.

Beispiele für derartige anorganische lumineszierende Pigmente /Farbstoffe sind beispielsweise modifizierte Barium oder Magesiumaluminate, dotierte Zn-sulfide oder Phosphorverbindungen und dergleichen.
Beispiele für organische lumineszierende Pigmente/Farbstoffe sind beispielsweise Anthranilsäurederivate, Oxinate, Benzoxatinderivate, Europiumchelate und dergleichen.

Diese Pigmente weisen eine Größe von 0,1 bis 50 µm und einer Größe von 20-50µm auf, wobei zur Erzielung einer hohen Leuchtkraft Pigmente eine Größe von 1 bis 20 µm bevorzugt sind. Die Farbstoffe sind vorzugsweise in einer Konzentration von mindestens 5% vorhanden.
Vorzugsweise werden die Pigmente und/oder Farbstoffe in einem lösungsmittelbasierten Konzentrat mit einem Dispergier- und/oder Netzmittel zu einem Konzentrat formuliert. Diese Konzentrate ist mit einem weiten Spektrum an Bindemitteln verträglich.

Dazu werden diese Pigmente bzw. Farbstoffe mit Hilfe geeigneter Dispergier- und/oder Netzmitteln zu einem Konzentrat formuliert.
Als Lösungsmittel kommen beispielsweise Wasser Alkohol, Benzin, Shellsol^{®} oder deren Gemische in Frage
Als Netz- oder Dispergiermittel werde nach der Erfindung Blockcopolymere mit pigmentaffinen Gruppen verwendet wie Disperk^{®} 182 oder 190.

Als Bindemittel können dann beispielsweise alle konventionellen Bindemittel wie Polyvinylchlorid, Polyvinylbutyrale, Polyamide, Acrylate und dergleichen verwendet werden.
Ferner können zusätzlich Verbindungen zugegeben werden durch die die Fließeigenschaften der Farbe bzw. des Lacks eingestellt werden können. Beispiele für solche Verbindungen sind Silikate, pyrogene Kieselsäure und dergleichen.
Die Fließeigenschaften werden so eingestellt, dass die derart pigmentierte oder den Farbstoff enthaltende Farbe bzw. der Lack im Tiefdruckverfahren verdruckbar ist.

Die Pigmente oder Farbstoffe können auch in verkapselter Form eingebracht werden.

Insbesondere bei biolumineszierenden oder chemolumineszierende Pigmenten oder Farbstoffen ist es empfehlenswert, die beiden, die Biolumineszenz bzw. Chemolumineszenz hervorrufenden Bestandteile nebeneinander in getrennt verkapselter Form in die Farbe bzw. den Lack einzubringen. Dabei werden sowohl die zur Biolumineszenz fähigen Stoffe, beispielsweise Luciferin und dergleichen, sowie das die Biolumineszenz auslösende Enzym, beispielsweise Luciferase getrennt in verkapselter Form als Pigment in die Farb- bzw. Lackzusammensetzung eingebracht.

Dabei kann die Verkapselung vollkommen getrennt erfolgen, es können aber auch sogenannten verschachtelten Verkapselungsverfahren eingesetzt werden, wobei ein Bestandteil in einem inneren Bereich des gesamten Pigments verkapselt wird, der zweite Bestandteil im äußeren, umgebenden Teil der Verkapselung vorhanden ist. Beispielsweise durch Reibung oder Druck oder thermische Einwirkung wird dann die Verkapselung aufgebrochen, die Bestandteile können miteinander reagieren und erzeugen so die charakteristische Biolumineszenz.

Analog werden zur Chemolumineszenz fähige Pigmente erzeugt. Beispiele für derartige Pigmente Chlorophyl in Verbindung mit Rhodamin B.

Die Farbe bzw. der Lack wird anschließend vorzugsweise im Tiefdruckverfahren auf ein Trägersubstrat aufgebracht.

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 5 - 700 µm, bevorzugt 8 - 200 µm, besonders bevorzugt 12 - 50 µm auf.

Ferner können als Trägersubstrat auch Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Ferner können als Trägersubstrate Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefaservliese eingesetzt werden. Die eingesetzten Gewebe oder Vliese weisen ein Flächengewicht von etwa 20 g/m² bis 500 g/m² auf. Gegebenenfalls können diese Gewebe oder Vliese oberflächenbehandelt sein.

Die Farbe bzw. der Lack kann vollflächig oder partiell, in Form von Zeichen, Mustern, geometrischen Figuren, Linien und dergleichen mittels bekannter Verfahren aufgebracht.
Die partielle Aufbringung kann passergenau zu einer und/oder mehreren bereits auf dem Trägersubstrat vorhandenen Schichten erfolgen, sie kann aber auch vollständig und/oder teilweise überlappend zu einer und/oder mehreren bereits vorhandenen Schichten erfolgen.

Die so aufgedruckten Merkmale sind bei Betrachtung unter weißem Licht transparent oder transluzent. Bei Anregung durch Energieeintrag, beispielsweise durch UV- Strahlung, zeigen die Merkmale ihre charakteristische Strahlung mit hoher Leuchtkraft, die je nach Art des/der Pigmente auch maschinell beispielsweise spektroskopisch, detektierbar sind.

In einer weiteren Ausführung können verschiedene lumineszierende Farben verdruckt werden. Dabei ist es möglich sowohl Fluoreszenzfarben als auch Phosphoreszenzfarben entweder vermischt oder in unterschiedlichen Schichten zu verdrucken.

Ferner ist es besonders vorteilhaft, wenn die fluoreszierende oder die phosphoreszierende Farbe erst mit einer bestimmten Zeitverzögerung zum Leuchten gebracht wird. Dies kann durch Farbstoffe oder Pigmente mit metastabilem Energieniveau erreicht werden, wie beispielsweise sogenannte Laserdyes (metastabile laseraktive Medien, wie beispielsweise Saphirlaser, Rubinlaser, seltene Erden Nd, Y, und dergleichen)

In einer weiteren Ausführungsform können durch die Verwendung von mehrfarbigen Fluoreszenzen zusätzliche Sicherheitsmerkmale eingebracht werden.
Diese in unterschiedlichen Farben fluoreszierenden Schichten können jeweils vollflächig oder bevorzugt partiell aufgebracht werden. Bei partieller Aufbringung der in unterschiedlichen Farben fluoreszierenden Schichten werden, falls diese unterschiedlichen Schichten nicht überlappend sonder jeweils in freien Zwischenräumen aufgebracht werden, die reinen Fluoreszenzfarben sichtbar.
In den Überlappungszonen werden dann je nach Anordnung der unterschiedlichen Schichten übereinander jedoch durch die additive Farbmischung neue, durch die Anordnung der unterschiedlichen Fluoreszenzfarben eindeutig definierte Farbtöne erhalten. Die anregende Strahlung transmittiert gegebenenfalls in die darunterliegenden Schichten und erzeugt so die definierten Farbtöne.
Bei partieller Aufbringung mit definierten Überlappungszonen in Form von Mustern, Linien, geometrischen Figuren, Zeichen, Buchstaben, Zahlen, eines Rasters mit passergenau definierten vollflächigen oder teilweisen Überlappungszonen werden durch diese Anordnung der Schichten zusätzliche fälschungssichere Merkmale erzeugt.

In einer weiteren Ausführungsform der Erfindung können die lumineszierenden Farben oder Lacke mit einem im IR-Spektrum reflektierenden Pigment oder Farbstoff kombiniert werden. Dieses IR-reflektierende Pigment bzw. der Farbstoff kann mittels Laserstrahlung sichtbar gemacht werden.

So kann beispielsweise ein rot fluoreszierendes Pigment oder Farbstoff in einer Farbe oder einem Lack mit einem grünen IR-reflektierenden Pigment oder Farbstoff vermischt werden.

Bei einer wie oben beschriebenen Anordnung von unterschiedlichen Schichten mit unterschiedlicher Fluoreszenz und/oder unterschiedlichen IR-reflektierenden Pigmenten werden ebenfalls wieder definierte Farbtöne, sowohl bei Anregung der Fluoreszenz als auch bei Anregung der IR-reflektierenden Pigmente oder Farbstoffe erzeugt, die zusätzliche Fälschungssicherheit gewährleisten.

Üblicherweise können 2 bis 10 derartige Schichten mit gegebenenfalls unterschiedlichen lumineszierenden bzw. fluoreszierenden und/oder IR-reflektierenden Eigenschaften vollflächig oder bevorzugt partiell verdruckt werden.
Besonders bevorzugt werden 3 bis 5 derartige Schichten auf eine Trägerfolie aufgebracht.

Gegebenenfalls können mit derartigen Farben oder Lacken hergestellte Sicherheitsmerkmale zusätzlich durch Verdrucken in verschiedenen Schichten mit mindestens einer dazwischen liegenden Schicht, von denen eine der Schichten eine Schicht mit unterschiedlichen Haftbereichen ist, ein zusätzliches Sicherheitsmerkmal darstellen.

Die unterschiedlichen Haftbereiche werden durch Aufbringen einer Releaseschicht bzw. einer Haftschicht auf das Trägersubstrat erzeugt.
Als Releaseschichten kommen insbesondere bekannte schlecht haftende Lackzusammensetzungen, beispielsweise auf Methacrylatbasis in Frage. Ferner können auch sehr dünn aufgetragene Ölschichten, PE- oder Fluorpolymerwachsschichten als Releaseschicht verwendet werden.

Die Releaseschicht wird auf das Trägersubstrat partiell aufgetragen. Zur Aufbringung der Releaseschicht kann jedes gängige Druckverfahren verwendet werden, bevorzugt Verfahren mit denen dünnste Schichten von 0,01 bis 50 µm exakt aufbringbar sind, beispielsweise Sprühen, Aufdampfen, Aufstreichen, Walzenauftragsverfahren, Tief- Flexo-, Sieb-, Offset- und Digitaldruck und dergleichen.

Bei intakter Releaseschicht zeigt sich beispielsweise bei Betrachtung unter Anregung eine Mischfarbe, bei Beschädigung der Releaseschicht werden die reinen Farben sichtbar.

Gegebenenfalls können die Sicherheitselemente auch zusätzlich termochrome, elektrisch leitfähige und/oder magnetische Schichten und/oder Oberflächenstrukturen aufweisen.

Die Aufbringung der Schichten kann durch ein beliebiges Verfahren, beispielsweise durch Tiefdruck, Flexodruck, Siebdruck, Digitaldruck und dergleichen erfolgen.
Die einzelnen Merkmale können vollflächig oder partiell, beispielsweise in Form von Mustern, Linien, Buchstaben, Zeichen, geometrischen Formen, Raster und dergleichen aufgebracht werden.

Zur Aufbringung eines Merkmals mit optischen Eigenschaften können pigmentierte oder nicht pigmentierte Farb- oder Lackzusammensetzungen verwendet werde. Als Pigmente können alle bekannten Pigmente, beispielsweise Pigmente auf anorganischer Basis, wie Titandioxid, Zinksulfid, Kaolin, ITO, ATO, FTO, Aluminium, Chrom- und Siliciumoxide, oder Pigmente auf organischer Basis, wie Phtalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werde. Als Farbstoffe kommen beispielsweise 1,1- oder 1,2. Chrom-Cobalt-Komplexe in Frage.
Dabei sind lösungsmittelhaltige Farben- und/oder Lacksysteme, wässrige und auch lösungsmittelfreie Lacksysteme verwendbar.
Als Bindemittel kommen verschiedene natürlich oder synthetische Bindemittel in Frage.

Ferner können Farben oder Lacke mit lumineszierenden, beispielsweise phosphoreszierenden oder fluoreszierenden Eigenschaften, Lacke mit definiertem Brechungsindex oder thermochrome Farben aufgebracht werden.

Zur Aufbringung eines Merkmals mit magnetischen Eigenschaften können paramagnetische, diamagnetische und auch ferromagnetische Stoffe, wie Eisen, Nickel und Cobalt oder deren Verbindungen oder Salze (beispielsweise Oxide oder Sulfide) oder Legierungen aus Seltenerdmetallen, wie beispielsweise Coblat/Samarium-Legierungen verwendet werden.

Besonders geeignet sind Magnetpigmentfarbe mit Pigmenten auf Basis von Fe-Oxiden, Eisen, Nickel, Cobalt und deren Legierungen, Barium oder Cobaltferrite, hart- und weich magnetische Eisen- und Stahlsorten in wässrigen bzw. lösungsmittelhaltigen Dispersionen. Als Lösungsmittel kommen Beispielsweise i-Propanol, Ethylacetat, Mathylethylketon, Methoxypropanol, und deren Mischungen in Frage.
Vorzugsweise sind die Pigmente in Acrylat-Polymerdispersionen mit einem Molekulargewicht von 150.000 bis 300.000, in Acrylat-Urethan-Dispersionen, Acrylat- Syrol, Nitrocellulose oder PVC-haltigen Dispersionen oder lösungsmittelhaltige derartige Dispersionen eingebracht.

Die magnetische Schicht kann beispielsweise auch partiell in Form eines Codes aufgebracht werden, etwa in Form eines so genannten Barcodes, der dann gegebenenfalls maschinell auslesbar ist.

Zur Aufbringung einer Schicht mit elektrischen Eigenschaften können der aufzubringenden Farbe bzw. dem aufzubringenden Lack, beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, ATO, FTO und dergleichen zugegeben werden. Weiters können auch dotierte oder nicht dotierte Halbleiter wie beispielsweise Silicium, Germanium oder dotierte oder nicht dotierte polymere Halbleiter oder lonenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen wie Tenside, oder unpolare Verbindungen wie Silikonadditive oder hygroskopische oder nicht hygroskopische Salze verwendet oder dem Lack zugesetzt werden.
Gegebenenfalls können drucktechnisch auch Transistoren auf den Leiterbahnen erzeugt werden.

Als Schicht mit elektrischen Eigenschaften kann auch eine partielle Metallschicht aufgebracht werden, wobei die partielle Aufbringung mittels eines Ätzverfahrens (Aufbringung einer vollflächigen Metallschicht und anschließende partielle Entfernung durch Ätzen) oder mittels eine Demetallisierungsverfahrens erfolgen kann.
Bei Verwendung eines Demetallisierungsverfahrens wird in einem ersten Schritt eine in einem Lösungsmittel lösliche Farbe (gegebenenfalls in Form einer inversen Codierung) aufgebracht, anschließend wird, gegebenenfalls nach Aktivierung des Trägersubstrats durch eine Plasma- oder Coronabehandlung, die metallische Schicht aufgebracht, worauf die lösliche Farbschicht durch Behandlung mit einem geeigneten Lösungsmittel samt der in diesen Bereichen vorhandenen Metallisierung abgelöst wird.

Ferner kann als elektrisch leitfähige Schicht auch eine elektrisch leitfähige Polymerschicht aufgebracht werden. Die elektrisch leitfähigen Polymeren können beispielsweise Polyanilin oder Polyethylendioxythiophen sein.

Eine derartige Schicht kann auch als Antenne fungieren, wobei an der Antennenstruktur Kontaktflächen zum Anschließen eines oder mehrerer Mikroschaltkreise vorgesehen sein könnte.

Falls weitere Informationen gespeichert werden sollen kann die Antennenstruktur als direkte Kontaktfläche für übliche Chipsystem, übliche elektronische Schaltkreise und dergleichen dienen.

Ferner können auch gedruckte elektronische Schaltkreise aus elektrisch leitfähigen Polymeren und/oder aufgedampften metallischen Schichten und/oder Halbleitern in Verbindung mit leitfähigen Polymeren bestehen.

Ferner kommen als zusätzliche Sicherheitsmerkmale auch weitere Oberflächenreliefstrukturen, beispielsweise Beugungsgitter, Hologramme und dergleichen in Frage, wobei diese Strukturen gegebenenfalls auch metallisiert oder partiell metallisiert sein können.

Zur Herstellung derartiger Oberflächenstrukturen wird vorerst UV-härtbarer tiefziehfähiger Lack aufgebracht. Anschließend kann beispielsweise eine Oberflächenstruktur durch Abformen einer Matrize in diesen Lack, der zum Zeitpunkt der Abformung bis zum Gelpunkt vorgehärtet ist, hergestellt, worauf anschließend der strahlungshärtbare Lack nach Aufbringung der Oberflächenstruktur vollständig ausgehärtet wird.

Durch die Verwendung des UV-härtbaren Lacks sind nach der Aushärtung darauf aufgebrachte Schichten, auch eine gegebenenfalls eingebrachte Oberflächenstruktur, auch unter Temperaturbelastung stabil.

Der strahlungshärtbare Lack kann beispielsweise ein strahlungshärtbares Lacksystem auf Basis eines Polyester-, eines Epoxy oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm. Zwischen den Aktivierungswellenlängen der beiden Photoinitiatoren sollte genügend Differenz eingehalten werden, damit nicht eine zu starke Anregung des zweiten Photointiators erfolgt, während der erste aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Ferner können die erfindungsmäßigen Sicherheitselemente mit einer Schutzlackschicht ein- oder beidseitig versehen sein. Der Schutzlack kann pigmentiert oder nicht pigmentiert sein, wobei als Pigmente alle bekannte Pigmente oder Farbstoffe, beispielsweise TiO₂, ZnS, Kaolin, ATO, FTO, Aluminium, Chrom- und Siliziumoxide oder beispielsweise organische Pigmente wie Pthalocyaninblau, i-Indolidgelb, Dioxazinviolett und dergleichen verwendet werden können. Ferner können lumineszierende Farbstoffe bzw. Pigmente, die im sichtbaren, im UV-Bereich oder im IR-Bereich fluoreszieren bzw. phosphoreszieren, Effektpigmente wie Flüssigkeitskristalle, Perlglanz, Bronzen und/oder Multilayer-Farbumschlagpigmente und wärmeempfindliche Farben bzw. Pigmente zugegeben werden. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Ferner kann das erfindungsgemäße Sicherheitselement mit einem Heiß- oder Kaltsiegelkleber oder einer Selbstklebebeschichtung zur Aufbringung auf das zu schützende Wertdokument oder eine Verpackung versehen sein.

Es ist auch möglich das Sicherheitselement mit einem weiteren Trägersubstrat, das gegebenenfalls weitere funktionelle Schichten aufweist, zu kaschieren.

Die erfindungsgemäßen Sicherheitselemente werden gegebenenfalls nach entsprechender Konfektionierung (beispielsweise zu Fäden, Bändern, Streifen, Patches oder anderen Formaten) daher als Sicherheitsmerkmale in Datenträgern, insbesondere Wertdokumenten wie Ausweisen, Karten, Banknoten oder Etiketten, Siegeln und dergleichen, aber auch in Verpackungsmaterialien für sensible Güter, wie Pharmazeutika, Kosmetika, Datenträger, elektronische Bauteile und dergleichen verwendet.

## Patentansprüche

1. Sicherheitselemente die auf einem Trägersubstrat Sicherheitsmerkmale mit lumineszierenden durch Energieeintrag aktivierbare Eigenschaften aufweisen, **dadurch gekennzeichnet, dass** die durch Energieeintrag aktivierbaren Merkmale in Form einer im Tiefdruckverfahren aufgebrachten Beschichtung aus Farben und/oder Lacken, die Pigmente und/oder Farbstoffe einer Größe von 1 bis 50 µm und einer Grösse vom 20-50 µm und ein lösungsmittetbasiertes Konzentrat eines Netz- und/oder Dispergiermittel mit pigmentaffinen Blockcopolymeren enthalten, bestehen.

2. Sicherheitselemente nach Anspruch 1, **dadurch gekennzeichnet, dass** die Farben bzw. Lacke fluoreszierend phosphoreszierend, biolumineszierend oder chemolumineszierend sind.

3. Sicherheitselement nach einem der Ansprüche 1 - 2, **dadurch gekennzeichnet, dass** das Sicherheitsmerkmal eine mit einem IR-reflektierenden Pigment versehene lumineszierende Schicht aufweist.

4. Sicherheitselement nach einem der Ansprüche 1 - 3, **dadurch gekennzeichnet, dass** das Sicherheitsmerkmal eine oder mehrere weitere vollflächige und/oder partielle, in getrennten Bereichen oder teillweise und/oder vollständig überlappende funktionelle Schichten mit optischen Merkmalen aufweist.

5. Sicherheitselement nach Anspruch 4, **dadurch gekennzeichnet, dass** das Sicherheitselement Schichten mit elektrisch leitfähigen und/oder magnetisch und/oder optischen Eigenschaften aufweist.

6. Sicherheitselement nach einem der Ansprüche 1 - 5, **dadurch gekennzeichnet, dass** das Sicherheitselement ein- oder beidseitig mit einer Schutzlackschicht versehen ist.

7. Sicherheitselement nach Anspruch 6, **dadurch gekennzeichnet, dass** die Schutzlackschicht pigmentiert oder nicht pigmentiert ist.

8. Sicherheitselement nach Anspruch 7, **dadurch gekennzeichnet, dass** die Schutzlackschicht gefärbt ist und/oder lumineszierende oder irisierende Eigenschaften aufweist.

9. Sicherheitselement nach einem der Ansprüche 1 bis 8, **dadurch gekennzeichnet, dass** es mit einem weiteren Trägersubstrat kaschiert oder verbunden ist.

10. Sicherheitselement, nach einem der Ansprüche 1 bis 9, **dadurch gekennzeichnet, dass** das weitere Trägersubstrat funktionelle und/oder dekorative Schichten aufweist.

11. Sicherheitselement nach einem der Ansprüche 1 bis 10, **dadurch gekennzeichnet, dass** die Sicherheitselemente ein- oder beidseitig mit einer Klebebeschichtung versehen sind.

12. Sicherheitselemente nach einem der Ansprüche 1 bis 11, **dadurch gekennzeichnet, dass** das Sicherheitselement zusätzlich zwischen einer oder mehreren funktionellen Schichten eine partielle Releaseschicht aufweist.

13. Sicherheitselemente nach einem der Ansprüche 1 bis 12, **dadurch gekennzeichnet, dass** die Sicherheitselemente zu Fäden, Streifen, Bändern, Patches und anderen Formaten konfektioniert werden.

## Claims

1. Security elements which on a support substrate comprise security features having luminescent properties which can be activated by introduction of energy, **characterized in that** the features which can be activated by introduction of energy and are in the form of a coating applied by the gravure printing process are composed of inks and/or varnishes which comprise pigments and/or dyes with a size of 1 to 50 µm and a size of 20-50 µm and a solvent-based concentrate of a wetting and/or dispersing agent comprising block copolymers with pigment affinity.

2. Security elements according to Claim 1, **characterized in that** the inks and/or varnishes are fluorescently phosphorescent, bioluminescent or chemoluminescent.

3. Security element according to one of Claims 1-2, **characterized in that** the security feature comprises a luminescent layer provided with an IR-reflecting pigment.

4. Security element according to one of Claims 1-3, **characterized in that** the security feature comprises one or more further full-area and/or partial functional layers having optical features, said layers overlapping fully and/or partially or in separate regions.

5. Security element according to Claim 4, **characterized in that** the security element comprises layers having electrically conductive and/or magnetic and/or optical properties.

6. Security element according to any one of Claims 1-5, **characterized in that** the security element is provided on one or both sides with a layer of protective varnish.

7. Security element according to Claim 6, **characterized in that** the layer of protective varnish is pigmented or unpigmented.

8. Security element according to Claim 7, **characterized in that** the layer of protective varnish is coloured and/or has luminescent or iridescent properties.

9. Security element according to any one of Claims 1 to 8, **characterized in that** it is joined or laminated to a further support substrate.

10. Security element according to any one of Claims 1 to 9, **characterized in that** the further support substrate comprises functional and/or decorative layers.

11. Security element according to any one of Claims 1 to 10, **characterized in that** the security elements are provided on one or both sides with an adhesive coating.

12. Security elements according to any one of Claims 1 to 11, **characterized in that** the security element further comprises a partial release layer between one or more functional layers.

13. Security elements according to any one of Claims 1 to 12, **characterized in that** the security elements are converted to filaments, strips, tapes, patches and other formats.

## Revendications

1. Eléments de sécurité présentant sur un substrat de support des caractéristiques de sécurité avec des propriétés de luminescence activables par apport d'énergie, **caractérisés en ce que** les caractéristiques activables par apport d'énergie se présentent sous forme d'un revêtement appliqué au cours d'un procédé de rotogravure à base de couleurs et/ou de vernis, lesquels contiennent des pigments et/ou des colorants d'une taille allant de 1 à 50 µm et d'une taille allant de 20 à 50 µm et un concentré à base d'un solvant d'un agent mouillant et/ou de dispersion avec des copolymères en bloc à affinité pigmentaire.

2. Eléments de sécurité selon la revendication 1, **caractérisés en ce que** les couleurs et/ou les vernis sont fluorescent(e)s, phosphorescent(e)s, bioluminescent(e)s ou chimioluminescent(e)s.

3. Elément de sécurité selon l'une quelconque des revendications 1-2, **caractérisé en ce que** la caractéristique de sécurité présente une couche luminescente munie d'un pigment à réflexion IR.

4. Elément de sécurité selon l'une quelconque des revendications 1-3, **caractérisé en ce que** la caractéristique de sécurité présente une ou plusieurs autres couches fonctionnelles sur toute la surface et/ou partielles, dans des zones séparées ou en superposition partielle et/ou totale avec des caractéristiques optiques.

5. Elément de sécurité selon la revendication 4, **caractérisé en ce que** l'élément de sécurité présente des couches à propriétés de conduction électrique et/ou à propriétés magnétiques et/ou optiques.

6. Elément de sécurité selon l'une quelconque des revendications 1-5, **caractérisé en ce que** l'élément de sécurité est muni, sur un côté ou sur les deux côtés, d'une couche de vernis de protection.

7. Elément de sécurité selon la revendication 6, **caractérisé en ce que** la couche de vernis de protection est pigmentée ou bien non pigmentée.

8. Elément de sécurité selon la revendication 7, **caractérisé en ce que** la couche de vernis de protection est colorée et/ou présente des propriétés de luminescence ou d'iridescence.

9. Elément de sécurité selon l'une quelconque des revendications 1 à 8, **caractérisé en ce qu'**il est contrecollé sur un autre substrat de support ou relié à celui-ci.

10. Elément de sécurité selon l'une quelconque des revendications 1 à 9, **caractérisé en ce que** l'autre élément de support présente des couches fonctionnelles et/ou décoratives.

11. Elément de sécurité selon l'une quelconque des revendications 1 à 10, **caractérisé en ce que** les éléments de sécurité sont munis, sur un côté ou sur les deux côtés, d'une couche adhésive.

12. Eléments de sécurité selon l'une quelconque des revendications 1 à 11, **caractérisés en ce que** l'élément de sécurité présente en outre, entre une ou plusieurs couches fonctionnelles, une couche antiadhésive partielle.

13. Eléments de sécurité selon l'une quelconque des revendications 1 à 12, **caractérisés en ce que** les éléments de sécurité sont confectionnés pour donner des fils, rubans, bandes, patchs et d'autres formats.
